# EUROPÄISCHE PATENTSCHRIFT

(11) **EP 2 454 192 B1**
(45) Veröffentlichungstag und Bekanntmachung des Hinweises auf die Patenterteilung: **10.07.2013**
(21) Anmeldenummer: 10721475.1
(22) Anmeldetag: 18.05.2010
(51) Int. Cl.: C01B 31/00, H01M 4/38, H01M 4/134, H01M 4/133

(54) **Verfahren zur Herstellung nanostrukturierten Silizium-Kohlenstoff-Kompositen für Batterieelektroden**
Method for producing nanostructured silicon-carbon composites for battery electrodes
Procédé de fabrication de composites silicium-carbone nanostructurés pour électrodes de batterie

(30) Priorität: 17.07.2009 DE 102009033739
(43) Veröffentlichungstag der Anmeldung: 23.05.2012
(73) Patentinhaber: Evonik Degussa GmbH, 45128 Essen (DE)
(72) Erfinder: MAISELS, Arkadi, 63452 Hanau (DE); STOMMEL, Yves Gorat, Shanghai 201612 (CN); STENGER, Frank, 63755 Alzenau (DE); MIESSEN, Martin, 45772 Marl (DE); ZIMMERMANN, Jutta, 63755 Alzenau (DE); DANNEHL, Manfred, 63796 Kahl am Main (DE); PILGRAM, Peter, 85055 Ingolstadt (DE)
(86) Internationale Anmeldenummer: PCT/EP2010/056780
(87) Internationale Veröffentlichungsnummer: WO 2011/006698

(56) Entgegenhaltungen:
- EP-A1- 2 080 736
- US-A1- 2008 145 757
- WANG, G.X. ET AL.: "Nanostructured Si-C composite anodes for lithium-ion batteries" ELECTROCHEMISTRY COMMUNICATIONS, [Online] Bd. 6, Nr. 7, 1. Juli 2004 (2004-07-01), Seiten 689-692, XP002593360 DOI: 10.1016/j.elecom.2004.05.010 in der Anmeldung erwähnt

## Beschreibung

Die Erfindung betrifft ein Verfahren zur Herstellung von nanostrukturierten Silizium-Kohlenstoff-Kompositen, die Komposite selbst, sowie deren Verwendung als Anodenmaterial für Lithium-Ionen-Batterien.

In handelsüblichen Lithium-Ionen-Batterien werden derzeit hauptsächlich Grafite als Anodenmaterial eingesetzt. Bei voller Ausnutzung der Interkalationsplätze von Grafit (LiC₆) steht so eine theoretische Kapazität von 372 mAh/g zur Verfügung, die praktisch nutzbare reversible Kapazität liegt jedoch darunter. Eine derartige Anode kombiniert mit einer Lithium-Übergangsmetall - basierten Kathode liefert Energiedichten von 150-200 Wh/kg bzw. 410 -500 Wh/l.

Der Anforderung an steigende Energiedichten wird u.a. durch Ersatz von Grafit durch andere, ebenfalls durch Li-Ionen interkalierbare Stoffe, verfolgt. Von besonderem Interesse sind hier die intermetallischen Phasen von Lithium mit Zinn bzw. Silizium. Maximale theoretische spezifische Kapazitäten liegen für Li₂₂Sn₅ bei ~990 mAh/g und für Li₂₂Si₅ bei ~ 4200 mAh/g. Besonders die großen Volumenausdehnungen bei der Lithium-Einlagerung /-Auslagerung resultieren in katastrophalem Zyklenverhalten dieser intermetallischen Anoden.

Dem Fachmann bleibt also derzeit nur die Möglichkeit zwischen Grafiten mit einer relativ niedrigen spezifischen Kapazität, aber recht hoher Zyklenstabilität und neueren Materialien mit noch völlig unzureichender Zyklenstabilität zu wählen.

Eine umfassende Übersicht über Ursachen und verschiedenste Ansätze zur Überwindung der Schwierigkeiten beim Einsatz von Silizium als Aktivkomponente in Lithium Ionen Batterien haben Kasavajjula, Wang und Appleby in Journal of Power Sources 163 (2007), 1003-1039*,* gegeben.

Als wesentliche Ursache wird hier die hohe Volumenänderung von ~400% zwischen reinem Silizium und vollständig lithiiertem Li₂₂Si₅ und dem daraus resultierenden schlechten elektronischen Kontakt zwischen Silizium Partikel und den eingesetzten Leitfähigkeitsadditiven genannt.

Der Stand der Technik kennt folgende Lösungsansätze zur Überwindung der aus der Volumenexpansion resultierenden Problematik:
1. Anoden aus reinem Silizium in Pulverform auf Mikro- und Nanometerskala;
2. In einer inaktiven Matrix dispergiertes Si;
3. In einer aktiven Matrix dispergiertes Si;
4. Silizium Anoden mit verschiedenen Bindern
5. Dünne Filme aus Si.

Ad 1.: Die Reduzierung der eingesetzten Silizium-Partikel in den Sub-Mikrometerbereich vermindert zwar den absoluten Volumenunterschied der Partikel beim Lithiieren und Delithiieren, jedoch geht der elektronische Kontakt zwischen den Partikel und dem Stromableiter verloren, berichten Guo, Wang, Liu, Dou in J. Power Sources 146 (2005) 448*.*

Ad 2.: Hochenergetisches Mischen von Silizium oder auch Zinn mit elektronisch leitenden Zusätzen wie Nitriden, Boriden von Übergangsmetallen und Siliciden von Übergangsmetallen sowie B und Ca, aber auch metallischen Zusätzen wie Fe, Co, Ni, Cu, weisen unakzeptable irreversible Kapazitäten auf, die sich erst durch Zusatz von Grafit bzw. kohlenstoff-basiertem Coating vermindern lassen. Eine Lithium-Ionen-Batterie mit einer Zinn-Cobalt-Kohlenstoff - basierten Anode, die eine ~30% höhere Kapazität aufweist, wird in einer Patentanmeldung EP 1 643 572 A1 von Sony offenbart.

Ad 3.: Aktive Matrices können aus Metallen, aber auch aus Kohlenstoff bestehen.

Zum Beispiel wird Mg₂Si in 3 Stufen von Li interkaliert, wobei die große Volumenausdehnung zur Zerstörung der Anode führt, berichtet von Kim et al. in J. Electrochem. Soc. 146 (1999) 4401*.* Dahn et al. berichten in J. Electrochem. Soc. 150 (2003) A149 bei Si₂Sn über eine hohe reversible Kapazität, jedoch finden sich keine Aussagen über Zyklendaten.

Legierungen aus Silizium mit den aktiven Metallen Sn, Zn, Al, oder mit inaktiven Metallen wie Cu, Co, Ni, B, Ti, Sb offenbart EP 1 463 131 A1 von Canon Kabushiki Kaisha. Diese Legierungen zeigen für 30 Zyklen Kapazitäten über 1000 mAh/g. Eine Si-Sn-Ni -Legierung zeigte in einer Vollzelle mit LiCoO₂-Kathode nach 100 Zyklen noch 75 % der Ausgangskapazität, offenbart in US 2004/0248011 von Canon Kabushiki Kaisha.

Aktive Kohlenstoffmatrices können mit verschiedenen Techniken hergestellt werden:

### Pyrolyse / CVD / TVD -Verfahren.

Die Pyrolyse von verschiedenen Polysiloxanen, zum Beispiel Polymethylphenylsiloxan (PMPS) und Polyphenylsesquisiloxane (PPSSO), führt bei Temperaturen über 1300 °C zu inaktivem Siliziumkarbid, bei ungefähr 1000 °C z.B. zu C_{2,9}SiOH_{y} mit y=0 - 1. Dieses Material ist amorph, zeigt einen irreversiblen Verlust von etwa 300 mAh/g bei einer reversiblen Kapazität von 450 mAh/g, offenbart bei Dahn et al. in Solid State Ionics 74 (1994) 249.

Ähnliche Ergebnisse wurden durch Pyrolyse anderer Si-haltiger Polymere von Dahn et al., J. Mat. Sci. Lett 19 (2000) 53, bzw. durch Co-Pyrolyse von Polymethacrylonitrile /divinylbenzene mit Tetramethylsilan bzw. Tetravinylsilan von Hayes et al., J. Electrochem. Soc. 146 (1999) 2435*,* gefunden und auf den verbliebenen Sauerstoffgehalt zurückgeführt.

TVD-Abscheidung von Silizium auf Kohlenstoff als Tetrahydrosilan auf Grafiten, zum Beispiel MCMB, ergab eine Kapazitätssteigerung von 290 mAh/g auf 462 mAh/g, wobei die coulombsche Effizienz bei nur 45 % liegt. Die SEI-Bildung, irreversible Li-Bindung und Verlust an Aktivmaterial werden als wesentliche Gründe angenommen von Xie in Mater. Chem. Phys. 88 (2003) 295*.*

Wird Timcal KS-6 als Substrat für die Siliziumabscheidung verwendet, liegt die irreversible Kapazität bei nur 26 %. Hierfür werden ähnliche Gründe wie von Xie angegeben. Das bessere Zyklenverhalten wird durch die bindend wirkende Deckschimesocht aus Li₂O erklärt, die durch Reaktion des Lithium mit dem Oberflächensauerstoff des abgeschiedenen Silizium gebildet wurde, berichten Holzapfel et al. in Chem. Commun. (2005), 1566*.*

Abscheidung von Kohlenstoff durch Gasphasenabscheidung auf Silizium zeigt relativ niedrige irreversible Kapazitäten, jedoch gibt die Kohlenstoffhülle dem Druck des expandierenden Silizium allmählich nach, und die Kapazität fällt schnell ab: Dimov et al., J. Power Sources 114 (2003) 88*.*

Auch bei limitierter Ladekapazität tritt ein solcher Abfall bei weniger als 100 Zyklen ein. Liu et al. erklären dies in einem Aufsatz in J. Electrochem. Soc. 152 (2005) A1719*,* damit, dass anfangs Lade- und Entladekapazität nahezu gleich sind, jedoch, sobald die Kohlenstoffhülle schwächer wird, die Partikel zuerst beim Entladen den elektronischen Kontakt verlieren und die Entladekapazität fällt, später der Kontakt der Partikel beim Laden zusammenbricht.

Silizium-Kohlenstoff Verbundmaterialien können auch rein mechanisch durch Energieeintrag in der Kugelmühle erzeugt werden. Wang et al. zeigen in J. Electrochemical Soc. 145 (1998), 2751*,* dass intensives Mahlen die reversible Kapazität gegenüber den nur gemischten Komponenten erhöht, wobei die irreversible Kapazität mit dem Siliziumgehalt zunimmt.

Die Kombination von Kugelmühle und Pyrolyse verbessert nach Liu et al., Solid State Ionics 168 (2004), 61*,* sowie Electrochem. Solid State Lett. 7 (2004), A369*,* sowohl das Zyklenverhalten, als auch die reversible Kapazität. Durch Mahlung wurden zuerst Silizium und Kohlenstoffprecursor gemischt, die Mischung pyrolisiert und die resultierende grobe Porenstruktur anschließend durch Mahlung wieder zerstört. Erneutes Zumischen von Kohlenstoffprecursoren mit nachfolgender Pyrolyse hob die coulombsche Effizienz auf 80 %.

Eine weitere Möglichkeit zur Erzeugung von Si - Kohlenstoff Verbundmaterialien ist die Verwendung von Kohlenstoff-Gelen als Precursormaterial für eine Pyrolyse.

In einer ersten Variante wird nach Niu et al., Anal. Commun. 36 (1999), 81, ein plättchenförmiger Grafit in Methyltrimethoxysilan suspendiert und die Suspension bei RT zu einem Sol-Gel-Grafit (SGG) geliert. Das hieraus resultierende Pulver weist ein offenes 3-dimensionales Netzwerk mit perkolierenden Grafitpartikeln auf. Vermahlung von SGG-Pulver mit Siliziumpulver und Verarbeitung dieser Mischung zu Elektroden resultiert in Anoden mit 80 % coulombscher Effizienz und 12 % Fading über 25 Zyklen.

Eine weitere Variante ist nach Wang et al. die Zugabe von nano-kristallinem Si-Pulver zu einer gelierenden Resorcin - Formaldehyd -Mischung, die für 10 Stunden bei 85°C aushärtet, offenbart in Electrochem. Commun. 6 (2004), 689*.* Diese Mischung ist ein kompakter Block, der bei 650 °C zu einem Silizium - Kohlenstoff Verbundmaterial mit 40 % Kohlenstoff umgesetzt wird. Die weitere Probenvorbereitung und Elektrodenzusammensetzung bzw. Herstellung können dem Aufsatz nicht entnommen werden, jedoch wird das erhaltene Komposit mit PVDF in NMP als Bindemittel versehen, auf Aluminiumfolie gecoatet, zu einer Halbzelle gegen Li-Metall verarbeitet, und mit C/10 zwischen 0,02 - 2,0 V elektrochemisch charakterisiert. Der irreversible Verlust im 1. Zyklus liegt trotz des angenommenen Siliziumgehaltes im Verbundmaterial von 60% bei unter 25 %.

Obwohl offensichtlich nur ein Teil des eingebrachten Siliziums am Zyklisieren teilnimmt, wird über 50 Zyklen eine gute Stabilität ausgesagt. In einer Halbzelle gegen Lithium ist die Verwendung von Aluminiumfolie als Stromsammler möglich, würde jedoch in einer Vollzelle kathodenseitig einen neuartigen Stromsammler erfordern. Über eine Interkalation des Aluminium-Stromsammlers durch Lithium wird nicht berichtet.

Ad 4.: Der Ersatz von thermoplastischem PVDF durch Elastomere wie Polyisobuten bei Holzapfel et al., Electrochem. Solid State Lett. 8 (2005), A516, oder EPDM bei Ishihara et al., J. Power Sources 146 (2005), 161*,* resultierte ebenfalls in hohen irreversiblen Verlusten bzw. in starkem Fading. Auch der Ersatz von löslichen Elastomeren gegen wässrige Emulsionen von z.B. Styrene-Butadiene-Rubber (SBR) mit Natrium-Carboxymethylcellulose (NaCMC) als Viskositätsmodifizierer, berichtet von Liu et al. in Electrochem. Solid State Lett. 8 (2005), A100*,* war nur für knapp 50 Zyklen bei einer Limitierung der Kapazität auf 600 mAh/g erfolgreich.

Ad 5.: Aus der Überlegung, die absolute Volumenexpansion des Silizium beim Zyklisieren zu minimieren, resultieren Versuche zur Herstellung bindemittelfreier nanokristalliner bzw. amorpher Schichten auf einem Stromkollektor. Verschiedene Autoren, z.B. Dahn et. al. in J. Electrochem. Soc. 151 (2004) A838 charakterisierten die beim Zyklisieren auftretenden kristallinen und amorphen Phasen. Demnach sollte beim Lithiieren die Spannung 0,05 V nicht unterschreiten, um die Koexistenz einer mechanischen Stress induzierenden kristallinen Phase Li₁₅Si₄ neben der lithiierten amorphen Phase zu vermeiden. Auch der Einfluss der Dicke der Si-Schicht, berichtet bei Yoshimura in J. Power Sources 146 (2005) 445*,* und der Abscheidegeschwindigkeit, Ohara in J. Power Sources 119 (2005) 591*,* wurden ohne positiven Einfluss auf die Zyklenfestigkeit untersucht.

EP 2080736 (Stand der Technik nach Art. 54(3) EPÜ) offenbart Kohlenstoff-Aerogele für u.a. Batterien und Brennstoffzellen.

Allen diesen technischen Lehren gemeinsam ist der Nachteil der bekannten Verbundmaterialien für die Verwendung als Anodenmaterial in einer Lithium-Ionen-Batterie in Gestalt ihrer hohen irreversiblen Kapazitäten und ihrer für praktische Anwendungen zu niedrigen Zyklenzahlen bei Lade- und Entladevorgängen.

Aufgabe der vorliegenden Erfindung war es daher, ein Verfahren zur Herstellung von Silizium-Kohlenstoff-Kompositen bereit zu stellen.

Gegenstand der vorliegenden Erfindung ist ein Verfahren zur Herstellung eines nanostrukturierten Silizium-Kohlenstoff-Komposites, welches die Schritte umfasst:
**(A)** Einbringen zumindest der Komponenten
   **(a1)** Mono- und/oder Polyhydroxyaromatische Verbindung, und
   **(a2)** ein Aldehyd, und
   **(a3)** ein Katalysator,
      in einen Reaktor, wobei eine Zusammensetzung erhalten wird, in der sich bei einer Reaktionstemperatur T von 75 bis 200 °C, und bei einem Druck von 80 bis 2400 kPa, und während einer Zeitdauer ***t_{A}*** von 0,001 bis 1.000.000 s
      die Komponenten in Gegenwart des Katalysators miteinander umsetzen, wobei ein Vorgelat erhalten wird, und
**(B)** Einbringen zumindest einer Komponente
   **(b1)** sub-mikrones Siliziumpulver, kristallin oder amorph,
      in die während oder nach Schritt (A) erhaltene Zusammensetzung,
      und anschließend
**(C)** Einbringen des nach Schritt (B) erhaltenen Produktes in ein Neutralisationsmittel,
   ausgewählt aus einer Säure, falls (a3) ein basischer Katalysator ist, oder einer Lauge, falls (a3) ein saurer Katalysator ist,
   wobei ein feinteiliges Produkt erhalten wird, und
**(D)** Trocknen des während oder nach Schritt (C) erhaltenen Produktes, und anschließend
**(E)** Karbonisieren des nach Schritt (D) erhaltenen Produktes bei einer Temperatur von 500 bis 1200 °C.

Das beanspruchte Verfahren hat den Vorteil, dass das Verfahren gleichermaßen kontinuierlich oder batchweise durchgeführt werden kann.

Das erfindungsgemäße Verfahren macht homogene Verteilungen definierter Mengen Silizium-Partikel im Silizium-Kohlenstoff-Komposit zugänglich. Solche Verteilungen ermöglichen gleichmäßig hohe Kapazitäten daraus hergestellter Anodenmaterialien für Energiespeichersysteme, zum Beispiel Lithiumionen-Batterien.

Das erfindungsgemäße Verfahren hat den weiteren Vorteil, dass damit ein Produkt erhalten wird, das eine für die Weiterverarbeitung zu Elektrodenmaterial verbesserte partikuläre Feinteiligkeit aufweist, die die dem Fachmann bekannte mechanische Aufarbeitung überflüssig macht. Die mechanische Aufarbeitung zu Elektrodenmaterial birgt die im Stand der Technik wohlbekannte Gefahr der Rissbildung und der Zerstörung des Gefüges des Komposites.

Die Erfindung wird im Folgenden näher erläutert.

Es kann vorteilhaft sein, im Schritt **(A)** des erfindungsgemäßen Verfahrens die Komponente **(a1)** auszuwählen aus Monohydroxybenzol, di-Hydroxybenzole, zum Beispiel Resorcinol,

Hydrochinon, und/oder Katechol, oder auszuwählen aus tri-Hydroxybenzole, zum Beispiel Phloroglucinol, oder ein Gemisch aus diesen Verbindungen.

Besonders bevorzugt kann **(a1)** ausgewählt werden aus Katechol, Resorcinol, Phloroglucinol, Hydrochinon, Phenol oder ein Gemisch aus diesen Verbindungen. Ganz besonders bevorzugt kann Phenol eingesetzt werden. Letzteres zeichnet sich durch einen hohen Kohlenstoffgehalt und kostengünstige Eduktkosten aus.

Die Komponente **(a2)** kann ausgewählt werden aus Formaldehyd, Glyoxal, Glutaraldehyd, Furfural, oder ein Gemisch aus diesen Aldehyden. Besonders bevorzugt kann Formaldehyd eingesetzt werden. Es kann weiterhin vorteilhaft sein, die eingesetzten Aldehyde als wässrige Lösung oder in einem Lösungsmittel einzusetzen. Das Lösungsmittel kann ausgewählt werden aus Wasser, Alkohole, Ketone, oder eine Mischung dieser Lösungsmittel.

Weiterhin bevorzugt kann **(a2)** eine Lösung aus Formaldehyd, Wasser und Stabilisatoren, zum Beispiel Methanol, sein.

Im Schritt (A) des erfindungsgemäßen Verfahrens können vorteilhaft Vorkondensate auf Basis von Mono- und/oder Polyhydroxybenzol und Aldehyd, wie zum Beispiel Resole und Novolak, eingesetzt werden.

Werden als **(a1)** bzw. **(a2)** Mono- und/oder Polyhydroxybenzol bzw. Aldehyd eingesetzt, kann die Konzentration an Mono- und/oder Polyhydroxybenzol und Aldehyd in der Reaktionsmischung von 10 bis 60 Gew.-%, bevorzugt von 20 bis 40 Gew.-%, besonders bevorzugt von 20 bis 30 Gew.-%, betragen.

Weiterhin bevorzugt kann das molare Verhältnis Mono- und/oder Polyhydroxybenzol zu Aldehyd, falls diese Komponenten eingesetzt werden, von 1:1 bis 1:4, besonders bevorzugt von 1:2 bis 1:3 betragen.

Der im Schritt **(A)** eingesetzte Katalysator wird ausgewählt aus Säure oder Base. Bevorzugt kann eine Base eingesetzt werden.

Die Säure als Komponente **(a3)** des erfindungsgemäßen Verfahrens kann ausgewählt werden aus organischen oder anorganischen Säuren, jeweils mit einer ausreichenden Löslichkeit. Die ausreichende Löslichkeit ist gleichbedeutend damit, dass durch die Auswahl des Lösungsmittels und dessen Menge der pH-Wert bei der Durchführung des Schrittes (A) eingestellt werden kann. Besonders bevorzugt kann die Säure ausgewählt werden aus HCl, Ameisensäure, Essigsäure.

Eine basische Komponente **(a3)** kann zum Beispiel ein Alkali- oder Erdalkali-Hydroxid sein, mit einer ausreichenden Löslichkeit im Lösungsmittel. Die ausreichende Löslichkeit ist gleichbedeutend damit, dass durch die Auswahl des Lösungsmittels und dessen Menge der pH-Wert bei der Durchführung des Schrittes (A) eingestellt werden kann. Bevorzugt kann (a3) ausgewählt werden aus NaOH, KOH, Na₂CO₃, K₂CO₃, NH₃. Besonders bevorzugt kann NaOH eingesetzt werden.

Werden als **(a1)** bzw. **(a2)** Mono- und/oder Polyhydroxybenzol bzw. Aldehyd und als Komponente **(a3)** NaOH eingesetzt, kann das molare Verhältnis vom eingesetzten Mono- und/oder Polyhydroxybenzol zu NaOH vorzugsweise von 0,1 bis 100, besonders bevorzugt von 0,5 bis 50, ganz besonders bevorzugt von 0,7 bis 20 betragen. Die Auswahl des molaren Verhältnisses aus diesen Bereichen hat den Vorteil, dass ein homogen geliertes Vorgelat erhalten und nach der Durchführung des erfindungsgemäßen Verfahrens eine definierte Porenstruktur erhältlich ist.

Im erfindungsgemäßen Schritt **(A)** kann eine weitere Komponente **(a4),** Porenformer eingesetzt werden. Der Porenformer kann ausgewählt werden aus Ethylenglykol, Polyethylenglykol, Butylenglykol, Diethylenglykol, Triethylenglykol, Gamma-Butyrolacton, Propylencarbonat, Dimethylformamid, Monoethanolamin oder N-Methyl-2-pyrrolidinon, oder ein Gemisch aus diesen Stoffen.

Falls die Komponente **(a3)** aus einer Base ausgewählt wird, kann es vorteilhaft sein, den pH-Wert der Zusammensetzung im Schritt (A) des erfindungsgemäßen Verfahrens von 7,5 bis 13, bevorzugt von 8,5 bis 12,0, besonders bevorzugt von 9,0 bis 9,7 zu wählen.

Es kann vorteilhaft sein, die Komponenten **(a1) - (a3)** im Schritt (A) in einem separaten Behälter zu mischen, bevor diese in den Reaktor eingebracht werden. Das Mischen kann bei einer anderen Temperatur als der Reaktionstemperatur T erfolgen. Hierdurch kann zusätzlich Einfluss auf die Reaktionskinetik genommen werden.

Die Reaktionstemperatur T kann vorzugsweise von 80 bis 150 °C, besonders bevorzugt von 85 bis 140 °C betragen. Der während des Schrittes (A) eingesetzte Druck im Reaktor kann vorzugsweise von 100 bis 700 kPa, besonders bevorzugt von 125 bis 500 kPa gewählt werden.

Der im Schritt **(A)** eingesetzte Druck kann von außen angelegt, durch Temperaturerhöhung im geschlossenen System oder durch eine Kombination aus beiden erzeugt werden.

Die Zeitdauer t_{A} wird im Schritt **(A)** gemessen ab dem Zeitpunkt, ab dem die Reaktionstemperatur T erreicht ist. Bevorzugt kann t_{A} von 1 bis 36000 s, besonders bevorzugt von 60 bis 3600 s betragen.

Die Umsetzung im Schritt **(A)** kann unter Rühren erfolgen.

Der Schritt **(B)** des erfindungsgemäßen Verfahrens kann vorzugsweise durchgeführt werden, während sich die Komponenten im Reaktor in der Durchführung des Schrittes **(A)** umsetzen. Der Zeitpunkt des Einbringens der Komponente **(b1)** in die während oder nach Schritt **(A)** erhaltene Zusammensetzung kann festgelegt werden, indem die Lichttransmission gemessen wird. Der Wert der Lichttransmission zum Zeitpunkt des Einbringens von **(b1)** kann bei einer Wellenlänge von 475 nm weniger als 80 %, vorzugsweise zwischen 0,01 % und 70 %, besonders bevorzugt zwischen 0,1 % und 50 % der Ausgangstransmission betragen. Die Ausgangstransmission wird zu dem Zeitpunkt gemessen, wann die Komponenten **(a1) - (a3)** in den Reaktor eingebracht sind.

Die Messung der Lichttransmission kann in-situ mit dem Photometer E616 (Firma Metrohm) erfolgen.

Der Zeitpunkt des Einbringens der Komponente **(b1)** in die während oder nach Schritt **(A)** erhaltene Zusammensetzung kann festgelegt werden, indem die Leitfähigkeit des Gemisches gemessen wird.

Weiterhin bevorzugt können die Durchführung des Schrittes **(B)** und **(A)** zu dem gleichen Zeitpunkt begonnen werden.

Weiterhin bevorzugt kann das Vorgelat, das im Schritt (A) erhalten wird, vor der Durchführung des Schrittes **(B)** während einer Zeitdauer t_{B} von 0,001 bis 3600 s, bevorzugt während 1 bis 3600 s abgekühlt werden. Besonders bevorzugt kann das Vorgelat vor der Durchführung des Schrittes **(B)** schlagartig abgekühlt werden.

Die Temperatur des abgekühlten Vorgelates vor der Durchführung des Schrittes **(B)** kann von 25 bis 95 °C, bevorzugt von 30 bis 80 °C, besonders bevorzugt von 35 bis 70 °C gewählt werden.

Im Rahmen der vorliegenden Erfindung wird unter dem Begriff "*sub-mikron"* der Längen- bzw. Größenbereich von 1 nm bis 999 nm verstanden. Zum Beispiel ist *sub-mikrones Pulver* gleichbedeutend mit Pulver, dessen Teilchengrößen im Bereich von 1 nm bis 999 nm liegen. Die Komponente **(b1),** die im Rahmen der vorliegenden Erfindung mit *anorganischer Phase* bezeichnet wird, enthält oder ist sub-mikrones Siliziumpulver, kristallin oder amorph. Ganz besonders bevorzugt ist die anorganische Phase sub-mikron kristallines oder sub-mikron amorphes Siliziumpulver.

Es kann vorteilhaft sein, im Schritt **(B)** des erfindungsgemäßen Verfahrens die Komponente **(b1)** in einer Menge von 1 bis 80 Gew-%, bevorzugt von 3 bis 60 Gew. %, besonders bevorzugt von 5 bis 20 Gew. % und ganz besonders bevorzugt von 10 bis 40 Gew.% einzubringen, wobei die Menge auf die Masse des nach Schritt **(E)** erhaltenen Komposits bezogen ist.

Es kann vorteilhaft sein, wenn die im Schritt **(B)** des erfindungsgemäßen Verfahrens eingebrachte Komponente **(b1)** außer Silizium zumindest eine weitere Komponente aufweist, die im Rahmen der vorliegenden Erfindung mit *zweiter anorganischer Phase* bezeichnet wird.

Die zweite anorganische Phase kann vorzugsweise sub-mikron partikulär und/oder ein sub-mikrones Komposit sein. Besonders bevorzugt kann diese anorganische Phase anorganische Partikel aufweisen oder sein, die weiterhin besonders bevorzugt kristallin, amorph, und/oder oberflächenmodifiziert sein können. Ganz besonders bevorzugt kann die zweite anorganische Phase oberflächenmodifizierte Partikel aufweisen oder sein. Die Oberflächenmodifikation verbessert die Dispersion und/oder die Leitfähigkeit des erfindungsgemäßen oder erfindungsgemäß erhaltenen Komposites.

Auch die Silizium-Partikel können oberflächenmodifiziert sein.

Die anorganischen Partikel und/oder Silizium-Partikel können agglomerierte Primärpartikel aufweisen oder aus diesen bestehen. Die mittlere Primärpartikelgröße kann von 5 bis 200 nm, bevorzugt von 10 bis 150 nm, besonders bevorzugt von 30 bis 100 nm betragen.

Die Bestimmung der Primärpartikelgröße kann mittels dem Fachmann bekannter TEM, SEM oder REM erfolgen.

Es kann weiterhin vorteilhaft sein, die zweite anorganische Phase auszuwählen aus Metallelement und/oder -ion, vorzugsweise Lithium, Zinn, Aluminium, Magnesium, Kalzium, Kupfer, Zink, Cobalt, Nickel, Mangan, Titan, Antimon, oder Mischungen dieser Metallelemente und/oder -ionen, und/oder auszuwählen aus Verbindungen der vorgenannten Stoffe mit Bor und/oder Stickstoff, Phosphor, Sauerstoff und/oder nichtmetallischen Substanzen, beispielsweise Ruß, Kohlenstoff-Aerogele, Carbon Nanotubes, Carbon Nanorods, Graphit, Graphene, graphitische Strukturen oder Mischungen der vorgenannten Stoffe.

Vorzugsweise kann die zweite anorganische Phase während und/oder nach dem Einbringen des sub-mikron kristallinen und/oder amorphen Siliziumpulvers, besonders bevorzugt während des Einbringens dieses Siliziumpulvers eingebracht werden.

Weiterhin kann es vorteilhaft sein die Komponente **(b1)** vor Durchführung des Schrittes **(B)** in einem Dispergiermittel zu dispergieren. Als Dispergiermittel können beispielweise Wasser, Alkohole oder Mischungen daraus eingesetzt werden.

Die Komponente **(b1)** kann mittels Rührorganen, Rotor-Stator-Systemen, HochdruckHomogenisatoren oder Ultraschall während des Schrittes **(B)** in das Vorgelat eingebracht werden.

Es kann vorteilhaft sein, im Schritt **(C)** des erfindungsgemäßen Verfahrens das nach Schritt **(B)** erhaltene Produkt mittels Einsprühen oder unter starkem Rühren einzubringen.

Die Feinteiligkeit des im Schritt **(C)** erhaltenen Produktes kann mittels Laserbeugungsmesstechnik ermittelt werden.

Besonders bevorzugt kann der Schritt **(C)** des erfindungsgemäßen Verfahrens nach einer Zeitdauer t_{C} durchgeführt werden, die die Dauer zwischen dem Beginn des Einbringens der Komponente **(b1)** und dem Beginn der Durchführung des Schrittes **(C)** ist.

Die Zeitdauer t_{C} kann vorzugsweise von 0,01 bis 3600 s, besonders bevorzugt von 0,1 bis 1800 s, ganz besonders bevorzugt von 1 bis 900 s gewählt werden.

Falls das Neutralisationsmittel eine Säure ist, kann dieses als Lösung, Dampf, oder als Gas eingesetzt werden. Diese Säure kann vorzugsweise konzentriert oder verdünnt eingesetzt werden.

Wird im Schritt **(C)** eine Säure eingesetzt, kann diese anorganisch, beispielsweise mineralisch, oder eine organische Säure sein. Die mineralische Säure kann ausgewählt werden aus Salzsäure, Salpetersäure, Phosphorsäure oder Schwefelsäure. Die organische Säure kann ausgewählt werden aus Essigsäure, Ameisensäure oder Oxalsäure. Als dampf- oder gasförmige Säure kann besonders bevorzugt HCl eingesetzt werden.

Wird in Schritt **(C)** eine gasförmige Säure eingesetzt, wird diese vorzugsweise auf eine Temperatur von 10 bis 300 °C, weiterhin bevorzugt von 50 bis 200 °C, besonders bevorzugt von 70 bis 180 °C gebracht.

Die eingesetzte Säure kann einen pH-Wert von kleiner 2,0, vorzugsweise von 0,5 bis 1,5, besonders bevorzugt von 0,5 bis 1,0 aufweisen.

Falls das im Schritt **(C)** eingesetzte Neutralisationsmittel eine Base ist, wird es als Lösung eingesetzt. Das in Schritt **(C)** eingesetzte Neutralisationsmittel kann vorzugsweise konzentriert oder verdünnt eingesetzt werden.

Wird im Schritt (C) eine Base eingesetzt, kann zum Beispiel ein Alkali- oder Erdalkali-Hydroxid, mit einer ausreichenden Löslichkeit im Lösungsmittel, eingesetzt werden. Bevorzugt kann die Base ausgewählt werden aus NaOH, KOH, Na₂CO₃, K₂CO₃, NH₃ oder jeder anderen Base. Besonders bevorzugt kann NaOH eingesetzt werden.

Die eingesetzte Base kann einen pH-Wert von größer 9,0, vorzugsweise von 9,5 bis 14, besonders bevorzugt von 9,5 bis 13 aufweisen.

Die Volumenmenge an eingesetztem Neutralisationsmittel kann mindestens das 1-fache, vorzugsweise mindestens das 4-fache des nach Schritt (B) erhaltenen Produktes betragen. Das Neutralisationsmittel kann vorzugsweise eine Temperatur von 0 bis 200 °C, besonders bevorzugt von 10 bis 90 °C, ganz besonders bevorzugt von 15 bis 50 °C aufweisen.

Vorzugsweise kann das Neutralisationsmittel während Schritt **(C)** gerührt werden.

Wird das nach Schritt **(B)** erhaltene Produkt im Schritt **(C)** eingesprüht, kann das Einsprühen mittels Düsen erfolgen. Vorzugsweise können die Düsenöffnungen von 0,01 bis 8 mm, besonders vorzugsweise von 0,05 bis 5 mm, ganz besonders bevorzugt von 0,1 bis 3 mm groß sein.

Als Düsen können Ein- oder Mehrstoffdüsen eingesetzt werden. Als Düsen können ebenfalls vorteilhaft Vollkegel-, Hohlkegel-, Flachstrahl- und Glattstrahldüsen eingesetzt werden. Weiterhin bevorzugt können im Schritt **(C)** Rotationszerstäuber, Vibrationszerstäuber oder Venturidüsen eingesetzt werden.

Die im Verfahrensschritt **(C)** durch das Einsprühen erzeugte Tropfengröße kann von 50 nm bis 3 mm, bevorzugt von 100 nm bis 1 mm, besonders bevorzugt von 200 nm bis 0,5 mm, sein.

Es kann weiterhin vorteilhaft sein, den Schritt **(C)** durchzuführen, indem man **(b1)** über eine Mehrstoffdüse direkt mit dem Vorgelat aus Schritt **(A)** mischt und ins Neutralisationsmittel einbringt.

Wird das aus **(B)** erhaltene Produkt während Schritt **(C)** durch Einsprühen eingebracht, kann als Zerstäubermedium ein gasförmiger Stoff ausgewählt werden, bevorzugt Luft, Stickstoff, CO₂, Argon und / oder dampf- oder gasförmige Säuren, davon bevorzugt HCl.

Das Einsprühen während der Durchführung des Schrittes **(C)** in das Neutralisationsmittel kann durch äußere Felder unterstützt werden, die vorzugsweise elektrische oder akustische Felder, zum Beispiel Ultraschall, sein können.

Nach Einbringen des nach Schritt **(B)** erhaltenen Produktes in ein Neutralisationsmittel im Schritt **(C)** kann während dieses Schrittes zusätzliche Scherenergie in das System eingebracht werden, um ein feinteiliges Produkt zu erhalten.

Die Scherenergie kann dabei mittels Rührorganen, Rotor-Stator-Systemen, Ultraschall oder Hochdruckhomogenisatoren eingebracht werden.

Die Verweilzeit im Neutralisationsmittel während Schritt **(C)** kann von 0,01 bis 100.000 s, bevorzugt von 1 bis 10000 s, besonders bevorzugt von 10 bis 5000 s gewählt sein.

Das während oder nach Schritt **(C)** erhaltene Produkt kann eingedickt, aufgereinigt und/oder getrocknet werden.

Das während oder nach Schritt **(C)** erhaltene Produkt kann ebenso vorzugsweise durch mehrmalige Waschung mittels destilliertem Wasser während des Eindickens aufgereinigt werden, um vorteilhaft ionische Bestandteile zu entfernen.

Die Eindickung des während oder nach Schritt **(C)** erhaltenen Produktes kann mittels Zentrifugation, Sedimentation, Filtration oder thermisch erfolgen.

Das während oder nach Schritt **(C)** erhaltene Produkt kann ebenso vorzugsweise durch mehrmalige Waschung mittels destilliertem Wasser erfolgen, falls dieses durch Filtration eingedickt wird.

Weiterhin vorteilhaft kann das während oder nach Schritt **(C)** erhaltene Produkt mittels Elektrodialyse aufgereinigt werden.

Die Trocknung in Schritt (D) kann vorzugsweise konvektiv, überkritisch, mittels Gefriertrocknung, Infrarot-Strahlung, Mikrowellen-Strahlung oder als Kombination der vorgenannten Trocknungsverfahren erfolgen.

Falls im Schritt **(C)** gasförmige Säure eingesetzt wird, kann der Schritt (D) während des Verfahrensschrittes **(C)** durchgeführt werden.

Es kann vorteilhaft sein, im Schritt **(D)** des erfindungsgemäßen Verfahrens eine konvektive Trocknung oder eine Gefriertrocknung durchzuführen. Bei einer konvektiven Trocknung kann vorzugsweise eine Temperatur von 10 bis 300 °C, besonders bevorzugt von 50 bis 200 °C gewählt werden. Falls eine Gefriertrocknung durchgeführt wird, kann eine Temperatur von minus 50 bis 0 °C, besonders bevorzugt von minus 20 bis 0 °C gewählt werden.

Die konvektive Trocknung kann besonders vorteilhaft als Sprühtrocknung durchgeführt werden. Durch den Einsatz einer Sprühtrocknung wird durch die vereinzelte Trocknung der Partikel vorteilhaft ein feinteiliges Produkt erhalten.

Falls im Schritt **(D)** Sprühtrocknung durchgeführt wird, kann das während oder nach Schritt **(C)** erhaltene Produkt vorteilhaft auch ohne Eindickung getrocknet werden. Die Sprühtrocknung kann vorzugsweise bei einer Temperatur von 80 bis 300 °C, besonders bevorzugt von 80 bis 250 °C durchgeführt werden.

Das nach Durchführung des Schrittes **(D)** erhaltene Produkt kann eine Restfeuchte aufweisen.

Diese Restfeuchte kann, bezogen auf den Massenanteil des Lösemittels im Reaktionsgemisch aus Schritt (A), von 0 bis 90 Gew.-%, bevorzugt von 10 bis 80 Gew.-%, besonders bevorzugt von 65 bis 75 Gew.-% betragen.

Die Bestimmung des Massenanteiles der Restfeuchte erfolgt gravimetrisch.

Es kann vorteilhaft sein, das nach Schritt **(D)** erhaltene Produkt vor dem Schritt **(E)** zu zerkleinern. Ein weiterer Trocknungsschritt kann sich anschließen. Vorteilhafterweise werden durch die Zerkleinerung kleinste Poren zugänglich, die anschließend vollständig getrocknet werden können.

Es kann vorteilhaft sein, im Schritt (E) des erfindungsgemäßen Verfahrens die Karbonisierung bei einer Temperatur von 600 bis 900 °C, besonders bevorzugt von 650 bis 800 °C durchzuführen. Weiterhin bevorzugt kann die Karbonisierung unter Sauerstoffausschluss, vorzugsweise unter Schutzgas, bevorzugt Stickstoff oder Argon, weiter bevorzugt im Vakuum durchgeführt werden. Es kann weiterhin vorteilhaft sein, die Karbonisierung mittels Einstrahlung von Infrarotlicht, Mikrowelle, unter einem Plasma, oder mittels elektrischer oder thermischer Heizung durchzuführen.

Das nach Schritt **(E)** erhaltene Silizium-Kohlenstoff-Komposit kann granuliert werden, falls das erfindungsgemäße Komposit Partikel aufweist, deren mittlere Größe kleiner ist als 10 µm. Vorteil dieser Nachbehandlung ist, dass bei der weiteren Handhabung des Komposites störende Entwicklung von Stäuben vermieden wird.

Desweiteren kann das erfindungsgemäß erhaltene Silizium-Kohlenstoff-Komposit auf jede dem Fachmann bekannte Weise nachbehandelt werden.

Mit dem erfindungsgemäßen Verfahren werden nanostrukturierte Silizium-Kohlenstoff-Komposite erhalten.

## Patentansprüche

1. Verfahren zur Herstellung eines nanostrukturierten Silizium-Kohlenstoff-Komposits, umfassend die Schritte
**(A)** Einbringen zumindest der Komponenten
**(a1)** Mono- und/oder Polyhydroxy-aromatische Verbindung, und
**(a2) ein** Aldehyd, und
**(a3)** ein Katalysator,
in einen Reaktor, wobei eine Zusammensetzung erhalten wird, in der sich
bei einer Reaktionstemperatur T von 75 bis 200 °C, und
bei einem Druck von 80 bis 2400 kPa, und
während einer Zeitdauer ***t_{A}*** von 0,001 bis 1.000.000 s die Komponenten in Gegenwart des Katalysators miteinander umsetzen, wobei ein Vorgelat erhalten wird, und
**(B)** Einbringen zumindest einer Komponente
**(b1)** sub-mikrones Siliziumpulver, kristallin oder amorph,
in die während oder nach Schritt **(A)** erhaltene Zusammensetzung,
und anschließend
**(C)** Einbringen des nach Schritt **(B)** erhaltenen Produktes in ein Neutralisationsmittel,
ausgewählt aus einer Säure, falls **(a3)** ein basischer Katalysator ist, oder einer Lauge, falls **(a3)** ein saurer Katalysator ist,
wobei ein feinteiliges Produkt erhalten wird, und
**(D)** Trocknen des während oder nach Schritt **(C)** erhaltenen Produktes,
und anschließend
**(E)** Karbonisieren des nach Schritt **(D)** erhaltenen Produktes bei einer Temperatur von 500 bis 1200 °C.

2. Verfahren nach Anspruch 1,
**dadurch gekennzeichnet,**
**dass** im Schritt **(A)** die Komponente **(a1)** ausgewählt wird aus mono-, di-, tri-Hydroxybenzol, oder ein Gemisch aus diesen Verbindungen.

3. Verfahren nach Anspruch 1,
**dadurch gekennzeichnet,**
**dass** in Schritt **(B)** die Komponente **(b1)** in einer Menge von 1 bis 80 Gew-% eingebracht wird, wobei die Menge auf die Masse des nach Schritt (E) erhaltenen Komposits bezogen ist.

4. Verfahren nach einem der vorhergehenden Ansprüche,
**dadurch gekennzeichnet,**
**dass** die Partikel der anorganischen Phase **(b1)** oberflächenmodifiziert sind.

5. Verfahren nach einem der vorhergehenden Ansprüche,
**dadurch gekennzeichnet,**
**dass** im Schritt **(C)** das nach Schritt **(B)** erhaltene Produkt mittels Einsprühen oder unter starkem Rühren eingebracht wird.

6. Verfahren nach Anspruch 1,
**dadurch gekennzeichnet,**
**dass** im Schritt (A) eine weitere Komponente
**(a4)** *Porenformer,* ausgewählt aus Ethylenglykol, Polyethylenglykol,
Butylenglykol, Diethylenglykol, Triethylenglykol, Gamma-Butyrolacton, Propylencarbonat, Dimethylformamid, Monoethanolamin, N-Methyl-2-pyrrolidinon, oder ein Gemisch aus diesen Stoffen
eingesetzt wird.

7. Verfahren nach einem der vorhergehenden Ansprüche,
**dadurch gekennzeichnet,**
**dass** das nach Schritt **(E)** erhaltene nanostrukturierte Silizium-Kohlenstoff-Komposit granuliert wird, falls dieses Komposit Partikel aufweist, deren mittlere Größe kleiner ist als 10 µm.

## Claims

1. Process for producing a nanostructured silicon-carbon composite, comprising the steps of
**(A)** introducing at least the components
**(a1)** mono- and/or polyhydroxyaromatic compound, and
**(a2)** an aldehyde, and
**(a3)** a catalyst,
into a reactor to obtain a composition in which the components react with one another in the presence of the catalyst
at a reaction temperature T of 75 to 200 °C, and
at a pressure of 80 to 2400 kPa, and
over a duration ***t_{A}*** of 0.001 to 1 000 000 s to obtain a pregel, and
**(B)** introducing at least one component
**(b1)** sub-micron silicon powder, crystalline or amorphous,
into the composition obtained during or after step **(A),**
and then
**(C)** introducing the product obtained after step **(B)** into a neutralizing agent
selected from an acid if **(a3)** is a basic catalyst, or
an alkali if **(a3)** is an acidic catalyst to obtain a fine product, and
**(D)** drying the product obtained during or after step **(C),**
and then
**(E)** carbonizing the product obtained after step **(D)**
at a temperature of 500 to 1200 °C.

2. Process according to Claim 1,
**characterized in that**
component **(a1)** in step **(A)** is selected from mono-, di-, trihydroxybenzene, or a mixture of these compounds.

3. Process according to Claim 1,
**characterized in that**
component **(b1)** in step **(B)** is introduced in an amount of 1 to 80% by weight, the amount being based on the mass of the composite obtained after step **(E).**

4. Process according to any of the preceding claims, **characterized in that**
the particles of the inorganic phase **(b1)** have been surface-modified.

5. Process according to any of the preceding claims, **characterized in that**
the product obtained after step **(B)** is introduced in step **(C)** by means of spraying or with vigorous stirring.

6. Process according to Claim 1,
**characterized in that**
a further component used in step (A) is
**(a4)** *pore formers* selected from ethylene glycol, polyethylene glycol,
butylene glycol, diethylene glycol, triethylene glycol, gamma-butyrolactone, propylene carbonate, dimethylformamide, monoethanolamine, N-methyl-2-pyrrolidinone, or a mixture of these substances.

7. Process according to any of the preceding claims, **characterized in that**
the nanostructured silicon-carbon composite obtained after step **(E)** is granulated if this composite comprises particles whose mean size is less than 10 µm.

## Revendications

1. Procédé pour la préparation d'un composite silicium-carbone nanostructuré, comprenant les étapes (A) introduction au moins des composants
(a1) un composé monohydroxyaromatique et/ou
polyhydroxyaromatique, et
(a2) un aldéhyde et
(a3) un catalyseur
dans un réacteur, avec obtention d'une composition dans laquelle les composants réagissent les uns avec les autres
à une température de réaction T de 75 à 200°C, et
à une pression de 80 à 2400 kPa, et
pendant un laps de temps t_{A} de 0,001 à 1 000 000 s en présence du catalyseur, avec obtention d'un produit prégélatinisé, et
(B) introduction d'au moins un composant
(b1) une poudre de silicium inférieure au micron, cristalline ou amorphe dans la composition obtenue pendant ou après l'étape (A), et ensuite
(C) introduction du produit obtenu selon l'étape (B) dans un agent de neutralisation, choisi parmi un acide, dans le cas où (a3) est un catalyseur basique, ou une lessive alcaline, dans le cas où (a3) est un catalyseur acide,
avec obtention d'un produit finement divisé, et
(D) séchage du produit obtenu pendant ou après l'étape (C), et ensuite
(E) carbonisation du produit obtenu selon l'étape (D) à une température de 500 à 1200°C.

2. Procédé selon la revendication 1, **caractérisé en ce que** dans l'étape (A), le composant (a1) est choisi parmi le monohydroxybenzène, le dihydroxybenzène, le trihydroxybenzène ou un mélange de ces composés.

3. Procédé selon la revendication 1, **caractérisé en ce que** dans l'étape (B), le composant (b1) est introduit dans une quantité de 1 à 80% en poids, la quantité se rapportant à la masse du composite obtenu après l'étape (E).

4. Procédé selon l'une quelconque des revendications précédentes, **caractérisé en ce que** les particules de la phase inorganique (b1) sont modifiées en surface.

5. Procédé selon l'une quelconque des revendications précédentes, **caractérisé en ce que** dans l'étape (C), le produit obtenu après l'étape (B) est introduit par injection ou sous forte agitation.

6. Procédé selon la revendication 1, **caractérisé en ce que** dans l'étape (A), on utilise un autre composant
(a4) un agent de formation de pores, choisi parmi l'éthylèneglycol, le polyéthylèneglycol, le butylèneglycol, le diéthylèneglycol, le triéthylèneglycol, la gamma-butyrolactone, le carbonate de propylène, le diméthylformamide, la monoéthanolamine, la N-méthyl-2-pyrrolidinone, ou un mélange de ces substances.

7. Procédé selon l'une quelconque des revendications précédentes, **caractérisé en ce que** le composite de silicium-carbone nanostructuré obtenu selon l'étape (E) est granulé dans le cas où ce composite contient des particules dont la grosseur moyenne est inférieure à 10 µm.
